# EUROPÄISCHE PATENTANMELDUNG

(11) **EP 1 389 751 A2**
(43) Veröffentlichungstag der Anmeldung: **18.02.2004**
(21) Anmeldenummer: 03015299.5
(22) Anmeldetag: 07.07.2003
(51) Int. Cl.: G06F 1/00

(54) **Verfahren und System zur Auswertung sensibler Daten**

(30) Priorität: 18.07.2002 DE 10232678
(71) Anmelder: SIEMENS AKTIENGESELLSCHAFT, 80333 München (DE)
(72) Erfinder: Abraham-Fuchs, Klaus, 91058 Erlangen (DE)

(57) **Zusammenfassung**

Die vorliegende Erfindung betrifft ein Verfahren sowie ein System zur Auswertung sensibler Daten, bei denen die sensiblen Daten in verschlüsselter Form abgespeichert werden. Zur Auswertung der Daten wird ein Auswertemodul (5) bereitgestellt, das Mittel für die Entschlüsselung der verschlüsselten Daten und ein oder mehrere vorgegebene Auswerteoptionen beinhaltet, die von einem Berechtigten im Auswertemodul (5) gesperrt oder freigegeben werden können und denen Expertenregeln für die Durchführung der Auswertung zugeordnet sind, auf die das Auswertemodul (5) Zugriff hat. Die vom Berechtigten freigegebenen Auswerteoptionen werden einem Nutzer zur Auswahl bereitgestellt. Nach der Auswahl führt das Auswertemodul (5) eine interne Entschlüsselung der verschlüsselten Daten und eine Auswertung der entschlüsselten Daten nach einer oder mehreren einer ausgewählten Auswerteoption zugeordneten Expertenregeln durch und gibt das Auswerteergebnis aus, ohne die entschlüsselten Daten außerhalb des Auswertemoduls (5) zugänglich zu machen. Mit dem Verfahren und dem zugehörigen System lassen sich sensible Patientendaten durch einen Arzt nutzen ohne das Risiko einer ungewollten Offenlegung der einzelnen Daten einzugehen.

## Beschreibung

Die vorliegende Erfindung betrifft ein Verfahren sowie ein System zur Auswertung sensibler Daten, insbesondere medizinischer Daten von Patienten, mit denen die Daten von berechtigten Dritten genutzt werden können, ohne für diese direkt verfügbar zu sein.

Der Umgang mit schützenswerten Daten spielt in vielen Bereichen ein wichtige Rolle. Gerade auf dem medizinischen Sektor fallen zahlreiche sensible Daten an, insbesondere medizinische Daten der Patienten, die in besonderer Weise vor dem Zugriff Dritter geschützt werden müssen. Als besonders offensichtliches und wichtiges Beispiel seien Daten aus dem Genom des Patienten (DNA Sequenz-Daten) genannt. Auf der einen Seite können aus diesen Daten medizinisch sehr wichtige Informationen, etwa über die Wirksamkeit eines bestimmten Medikaments bei diesem Patienten, über Nebenwirkungen eines Medikaments, über eine bestehende Prädisposition für eine bestimmte Krankheit, usw., gewonnen werden. Auf der anderen Seite enthalten diese Daten auch sehr vertrauliche Information, die der Patient anderen, bspw. der Krankenkasse, dem Arbeitgeber oder seinen Verwandten, nicht zukommen lassen möchte. Derartige vertrauliche Informationen können z. B. die erbliche Veranlagung für eine Krankheit, das Vorliegen einer noch symptomlosen Krankheit usw. umfassen. Somit ergibt sich für den Patienten der Zwiespalt, ob er DNA-Daten von sich erheben und beispielsweise für Diagnosezwecke zur Verfügung stellen will, damit jedoch das Risiko eingeht, dass diese Daten für ihm nicht genehme Zwecke missbraucht werden könnten, oder ob er die Erhebung der Daten verweigern soll, damit jedoch die Diagnose- oder Therapiemöglichkeiten von Krankheiten einschränkt.

Aus der WO 95/26006 ist ein Verfahren zur Information eines Arztes über den Gesundheitszustand eines Patienten bekannt. Bei diesem Verfahren wird bei zumindest einer Untersuchung eine Einordnung von gesundheitlichen Beeinträchtigungen des Patienten in unterschiedliche Kategorien zusammen mit einer Einstufung der Ernsthaftigkeit der gesundheitlichen Beeinträchtigung vorgenommen und die Einstufung in den jeweiligen Kategorien auf einem Datenträger abgespeichert. Der Zugang zu den Daten kann hierbei über einen Zugangsschlüssel gesichert sein, der auf einer Chipkarte oder Smart Card ggf. zusammen mit den Einstufungsdaten abgespeichert ist. Der Patient bringt dann diese Chipkarte zu dem jeweiligen Arzt, der die Einstufungsdaten mit Erlaubnis des Patienten abrufen und für seine Diagnose- oder Therapie-Entscheidung nutzen kann.

Aus der US 6,031,910 sind ein Verfahren sowie ein System für die sichere Übertragung und Speicherung von sensiblen Daten bekannt, bei denen die Daten in verschlüsselter Form abgespeichert werden. Der Schlüssel wird auf einer Chipkarte gespeichert, so dass die verschlüsselten Daten nur bei Benutzung der Chipkarte, ggf. unter Eingabe einer Zugangsberechtigung, genutzt werden können.

In beiden Fällen besteht jedoch noch immer ein Risiko des Zugangs zu den gespeicherten Daten, da nicht ausgeschlossen werden kann, dass zumindest ein Teil der verfügbar gemachten Daten durch den jeweils Zugangsberechtigten wiederum ohne Sicherung abgespeichert wird.

Die Aufgabe der vorliegenden Erfindung besteht darin, ein Verfahren sowie ein System zur Auswertung sensibler Daten bereitzustellen, bei denen ein Zugang Dritter zu den sensiblen Daten erheblich erschwert ist.

Die Aufgabe wird mit dem Verfahren sowie dem System gemäß den Patentansprüchen 1 bzw. 17 gelöst. Vorteilhafte Ausgestaltungen des Verfahrens sowie des Systems sind Gegenstand der Unteransprüche oder lassen sich aus der nachfolgenden Beschreibung sowie den Ausführungsbeispielen entnehmen.

Bei dem vorliegenden Verfahren werden die sensiblen Daten verschlüsselt und in verschlüsselter Form abgespeichert, vorzugsweise ohne einen Schlüssel zur Entschlüsselung der Daten zugänglich zu machen. Es wird vielmehr ein Auswertemodul bereitgestellt, das Mittel für die Entschlüsselung der verschlüsselten sensiblen Daten und ein oder mehrere vorgegebene Auswerteoptionen beinhaltet, die von einem Berechtigten im Auswertemodul gesperrt oder freigegeben werden können und denen Expertenregeln für die Durchführung der Auswertung zugeordnet sind, auf die das Auswertemodul Zugriff hat. Der Berechtigte ist hierbei der Eigentümer der Daten, der ein Interesse am Schutz der Daten hat und deren Nutzungsmöglichkeiten steuern kann. Dem Nutzer als dem Empfänger des Ergebnisses aus dem Auswertemodul wird eine Auswahlmöglichkeit von im Auswertemodul freigegebenen Auswerteoptionen bereitgestellt, wobei auf eine Auswahl des Nutzers hin eine interne Entschlüsselung der verschlüsselten Daten, eine Auswertung der entschlüsselten Daten nach einer oder mehreren einer ausgewählten Auswerteoption zugeordneten Expertenregeln und die Ausgabe eines Auswerteergebnisses durch das Auswertemodul durchgeführt wird, ohne die intern entschlüsselten Daten für einen Nutzer des Auswertemoduls zugänglich zu machen. Unter Expertenregeln sind hierbei auch mathematische Auswertealgorithmen zu verstehen.

Das zugehörige System umfasst entsprechend das Auswertemodul mit einer Eingabe- und einer Ausgabeschnittstelle für die Eingaben eines Berechtigten oder Nutzers und das Einlesen von Daten sowie die Ausgabe einer Information über die freigeschalteten Auswertemodule und die Ergebnisse der jeweiligen Auswertung. Das Auswertemodul beinhaltet die Mittel für die Entschlüsselung der verschlüsselten Daten sowie ein oder mehrere vorgegebene Auswerteoptionen, die durch Eingabe eines Berechtigten gesperrt oder freigegeben werden können. Es beinhaltet ferner eine Einrichtung zur internen Entschlüsselung der verschlüsselten Daten, zur Auswertung der entschlüsselten Daten nach einer oder mehreren Expertenregeln sowie zur Ausgabe des Auswerteergebnisses über die Ausgabeschnittstelle.

Bei einer Ausgestaltung des vorliegenden Verfahrens werden die sensiblen Daten in verschlüsselter Form abgespeichert, so dass niemand die Originaldaten wiederherstellen und lesbar machen kann. Dies erfordert, dass keiner Person ein Schlüssel für die Entschlüsselung und Darstellung der verschlüsselten Daten zugänglich gemacht wird. Die verschlüsselten Daten können vielmehr beim vorliegenden Verfahren nur durch das Auswertemodul intern entschlüsselt werden, ohne die entschlüsselten Daten jedoch extern verfügbar zu machen. Bei einer anderen Ausgestaltung des Verfahrens hat zusätzlich der Berechtigte einen Schlüssel zum Entschlüsseln der Daten.

Das Auswertemodul beinhaltet weiterhin ein oder mehrere vorgegebene Auswerteoptionen, die vom Berechtigten im Auswertemodul gesperrt oder freigegeben werden können und denen Expertenregeln für die Durchführung der Auswertung zugeordnet sind. Die Expertenregeln können hierbei ebenfalls im Auswertemodul implementiert oder außerhalb des Auswertemoduls abgespeichert sein, wobei dann das Auswertemodul bei Durchführung des Verfahrens selbstverständlich Zugriff auf diese Expertenregeln haben muss.

Vorzugsweise handelt es sich bei den vorgegebenen Auswerteoptionen um Fragestellungen, die für die Erstellung einer Diagnose oder Therapie wesentlich sind. Die zugehörigen Expertenregeln umfassen dann im einfachsten Fall Bedingungen wie bspw.:
- Krankheit A liegt vor, wenn die Bedingungen a, b und c erfüllt sind; oder
- Medikament B ist kontraindiziert, wenn die Bedingungen d und e erfüllt sind.

Die Bedingungen sind dabei derart vorgegeben, dass sich deren Erfüllung oder Nichterfüllung aus den verschlüsselten Patientendaten automatisch ableiten lässt.

Bei dem vorliegenden Verfahren bzw. dem zugehörigen System wird dem Nutzer eine Auswahlmöglichkeit von im Auswertemodul freigegebenen Auswerteoptionen bereitgestellt. Nach der Auswahl einer entsprechenden Auswerteoption, bspw. einer Fragestellung wie die Frage nach einer Kontraindikation, entschlüsselt das Auswertemodul die benötigten verschlüsselten Daten intern mit dem ggf. rekonstruierten Schlüssel, der innerhalb des Auswertemoduls zur Verfügung steht, und wertet die entschlüsselten Daten entsprechend der zur Auswerteoption gehörigen Expertenregel aus. Das Auswerteergebnis wird dann dem Nutzer, bspw. in Form einer Antwort auf die ausgewählte Fragestellung, ausgegeben.

Auf diese Weise erhält der Nutzer niemals direkten Zugang zu den entschlüsselten Einzeldaten. Die gewünschte Vertraulichkeit der Daten wird vielmehr gewahrt, indem der Berechtigte durch Sperrung oder Freigabe einzelner Auswerteoptionen bzw. Fragestellungen festlegen kann, welche Auswerteoptionen seiner Daten zur Verfügung stehen. Das Auswertemodul liefert dann auch nur die für die medizinische Entscheidung notwendige Antwort, wobei die für die Ableitung der Antwort notwendigen Daten aber für alle Beteiligten verborgen bleiben. Die entschlüsselten Daten werden somit niemals direkt zugänglich gemacht und können daher von einem berechtigten Nutzer des Systems auch nicht an einem anderen Ort abgespeichert werden. Auf diese Weise ist es möglich, vertrauliche Patientendaten für Diagnose- oder Therapie-Entscheidungen verfügbar zu machen, ohne dass die vertraulichen Daten selbst offen gelegt werden müssen. Ein Patient geht daher ein wesentlich geringeres Risiko als bisher ein, wenn er bspw. Daten aus seinem Genom erfassen und für Diagnosezwecke verfügbar machen will.

Die Mittel für die Entschlüsselung der verschlüsselten Daten, die das Auswertemodul beinhaltet, können direkt den Schlüssel für die Entschlüsselung der Daten oder auch einen Algorithmus zur Rekonstruktion des Schlüssel umfassen. Dieser Algorithmus erzeugt in bekannter Weise den Schlüssel aus vorgebbaren Daten, bspw. aus der Zugangsberechtigung wie einem Password oder einem Fingerprint des Berechtigten, und arbeitet in gleicher Art und Weise wie beim erstmaligen verschlüsselten Abspeichern der sensiblen Daten.

Beim vorliegenden Verfahren sowie dem zugehörigen System können sowohl ein Auswertemodul mit mehreren vorgegebenen Auswerteoptionen vorgesehen sein als auch mehrere getrennte Auswertemodule, die auch jeweils nur eine Auswerteoption umfassen können. In letzterem Fall werden die einzelnen Auswertemodule als Ganzes durch den Berechtigten freigeschaltet oder gesperrt. Bei der Freigabe kann dabei der Schlüssel in dem jeweiligen Auswertemodul gespeichert werden. Er ist für andere jedoch nicht direkt nutzbar, da einerseits das Auswertemodul nur durch den Berechtigten aktiviert oder gesperrt werden kann und andererseits nur das Ergebnis einer freigeschalteten Auswertung verfügbar ist.

In einer besonders sicheren Ausgestaltung des vorliegenden Verfahrens werden die sensiblen Daten unmittelbar bei bzw. nach deren Erfassung verschlüsselt, so dass sie zu keiner Zeit in unverschlüsselter Form auf einem Datenträger zugänglich sind. Diese Ausgestaltung lässt sich insbesondere bei einer automatisierten Erfassung bzw. Messung der Daten, bspw. bei der Erfassung von DNA Sequenz-Daten, realisieren.

In einer besonders vorteilhaften Ausgestaltung des vorliegenden Verfahrens sowie des zugehörigen Systems kann der Berechtigte, bspw. der Patient, zu einem beliebigen Zeitpunkt Auswerteoptionen freigeben bzw. neue freigegebene Auswerteoptionen in das Auswertemodul bzw. System laden. Er kann somit sichergehen, dass das System zur Beantwortung von ihm nicht genehmen Fragestellungen nicht konfiguriert ist und damit auch nicht zur Beantwortung derartiger Fragestellungen fähig ist. Selbstverständlich wird für die Sperrung und/oder Freigabe bzw. das Laden neuer freigegebener Auswerteoptionen eine Benutzerkennung abgefragt, bspw. ein spezielles Password, um die Sperrung und/oder Freigabe von Auswerteoptionen durch Nichtberechtigte zu verhindern. Nur bei Eingabe der korrekten Benutzerkennung können die entsprechenden Auswerteoptionen freigeschaltet oder gesperrt bzw. gelöscht oder neu hinzugefügt werden.

Auch alle weiteren interaktiven Vorgänge des Systems, wie das Abspeichern neuer Daten, das Löschen von Daten, die Auswahl von Auswerteoptionen sowie das Auslesen der Auswerteergebnisse sind vorzugsweise mit einem üblichen Zugriffsschutz versehen, so dass nur zugriffsberechtigte Nutzer die Funktionen des Systems ausführen können. Dem berechtigten Nutzer wird hierbei vorzugsweise eine Liste der im Auswertemodul freigeschalteten Auswerteoptionen zur interaktiven Auswahl auf einem Monitor dargestellt. Nach der Auswahl durch den Nutzer beginnt das Auswertemodul mit der Auswertetätigkeit gemäß den Expertenregeln, die der vom Nutzer ausgewählten Auswerteoption zugeordnet sind, und gibt das Auswerteergebnis vorzugsweise ebenfalls auf dem Monitor aus.

Das Auswertemodul selbst kann hierbei entweder in Hardware oder als Software realisiert sein. Bei der Realisierung als Software kann diese auf einer Datenverarbeitungsstation oder einem gesonderten Datenträger zum Aufruf abgespeichert sein. Als Datenträger kann bspw. auch eine Chipkarte eingesetzt werden. Die Entschlüsselung der Daten erfolgt bei Realisierung des Auswertemoduls in Software im Prozessor der jeweils eingesetzten Datenverarbeitungsstation. Bei einer Realisierung des Auswertemoduls in Hardware kann bspw. eine Chipkarte mit einem implementierten Prozessor, eine sog. Smart Card eingesetzt werden. In diesem Fall erfolgen die Entschlüsselung und Auswertung der Daten ausschließlich auf der Chipkarte. Auch die verschlüsselten Patientendaten können an unterschiedlichen Orten gespeichert sein. Als Beispiele hierfür kommen ebenfalls eine Chipkarte, eine CD-Rom oder andere elektronische Datenträger in Frage. So können diese Patientendaten bspw. in einer Datenbank gespeichert sein, die über ein Computersystem vernetzt ist. Das Auswertemodul kann sich hierbei an einem anderen Ort befinden, solange ein Zugriff über ein Netzwerk auf die Datenbank mit den verschlüsselten Patientendaten möglich ist.

In einer Ausführungsform des vorliegenden Verfahrens bzw. Systems sind sowohl das Auswertemodul als auch die Patientendaten auf dem gleichen Datenträger abgespeichert. Bei Nutzung eines portablen Datenträgers kann dieser in einen interaktiven Arbeitsplatz eingelegt werden, um einem Nutzer oder dem Berechtigten die Nutzung des Systems bzw. die Sperrung oder Freigabe von Auswerteoptionen zu ermöglichen. So kann beispielsweise ein Kartenlesegerät eine Chipkarte mit den verschlüsselten Patientendaten sowie dem Auswertemodul aufnehmen und die Interaktionen über einen angeschlossenen Rechner ermöglichen. Grundsätzlich können die verschlüsselten Patientendaten auch unabhängig vom Auswertemodul gespeichert bzw. gehandhabt werden. Eine Entschlüsselung der Daten ist jedoch nur mit dem Auswertemodul möglich.

Die Expertenregeln können zusammen mit dem Auswertemodul abgespeichert sein oder in einer getrennten Datenbank vorliegen. Eine Pflege der Expertenregeln in einer getrennten Datenbank, auf die das Auswertemodul bei Bedarf Zugriff hat, erleichtert ein Austauschen einzelner Expertenregeln oder der gesamten Datenbank gegen neuere Versionen, bei welchen die Bedingungen der Expertenregeln den neuesten wissenschaftlichen Erkenntnissen entsprechen. Viele der relevanten Patientendaten, insbesondere DNA Sequenz-Daten, müssen nur einmal im Leben erhoben werden und behalten ihre Gültigkeit über das gesamte Leben des Patienten. Dagegen wächst das Wissen über die medizinische Aussagekraft der Daten ständig, so dass ständig verbesserte oder neue Regeln benutzt werden sollten. Dies wird durch eine zentrale Speicherung der Expertenregeln in vorteilhafter Weise ermöglicht.

Selbstverständlich lässt sich das vorliegende Verfahren sowie das zugehörige System nicht nur für Gen-Daten sondern auch für andere Patientendaten sinnvoll einsetzen. So können bspw. mehrere Krankheiten oder Zustände, wie z. B. Schwangerschaft, eine Kontraindikation für ein bestimmtes Medikament sein. Die Expertenregeln sind dabei derart ausgebildet, dass sie alle möglichen Krankheiten oder Zustände, die zur Kontraindikation führen, berücksichtigen und die entschlüsselten Patientendaten auf Vorliegen dieser Bedingungen bzw. Krankheiten prüfen. Das System gibt dann jedoch lediglich eine Antwort darauf aus, ob das entsprechende Medikament kontraindiziert ist oder nicht. Der Grund für eine Kontraindikation bleibt ungenannt und vertraulich.

Auch wenn das vorliegende Verfahren und das zugehörige System in der vorliegenden Beschreibung sowie in den nachfolgenden Ausführungsbeispielen unter Bezugnahme auf medizinische Daten erläutert wurde, so ist für den Fachmann offensichtlich, dass das Verfahren sowie das System in gleicher Weise auch für die Auswertung anderer sensibler Daten einsetzbar sind, bei denen die Einzeldaten niemandem zugänglich sein sollen.

Das vorliegende Verfahren sowie das zugehörige System werden nachfolgend anhand von Ausführungsbeispielen in Verbindung mit den Zeichnungen nochmals kurz erläutert. Hierbei zeigen:
- Fig. 1: ein erstes Beispiel für die Durchführung des Verfahrens;
- Fig. 2: ein zweites Beispiel für die Durchführung des Verfahrens; und
- Fig. 3: ein Beispiel für die Implementierung und Nutzung des Systems in Form einer Chipkarte.

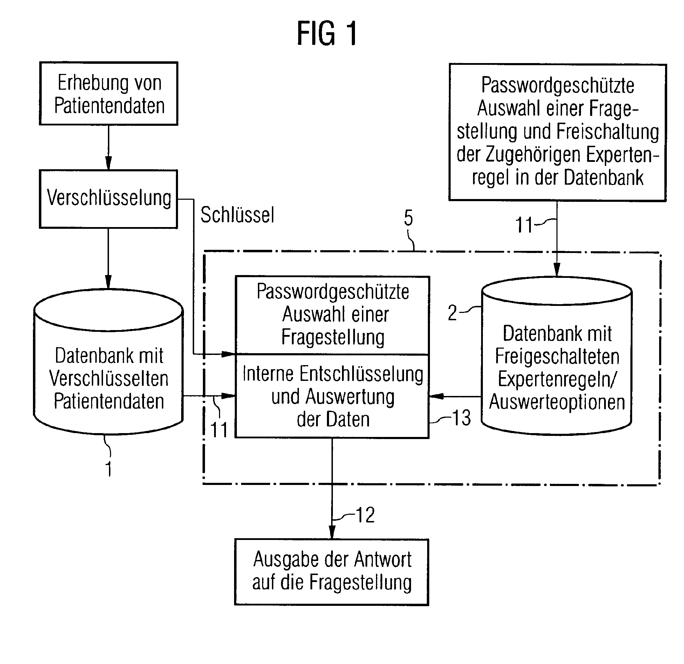

Figur 1 zeigt ein erstes Beispiel für die Durchführung des vorliegenden Verfahrens anhand der Erfassung und Auswertung von medizinischen Patientendaten. In einem ersten Schritt werden bei dem Verfahren die Patientendaten, bspw. DNA Sequenz-Daten, erhoben und vor der Abspeicherung unmittelbar verschlüsselt. Der für die Entschlüsselung der Daten erforderliche Schlüssel wird in einem Auswertemodul 5 derart abgespeichert, dass er niemandem zugänglich ist. Die verschlüsselten Daten werden in einer Datenbank 1 abgespeichert, die bspw. auf einer Chipkarte, einer Festplatte eines Rechnersystems oder einem sonstigen elektronischen Datenträger ausgebildet sein kann. Diese verschlüsselten Patientendaten können zwar beliebig kopiert und weiterverbreitet werden, lassen sich jedoch aufgrund ihrer verschlüsselten Form von niemandem entschlüsseln und somit lesen.

Das Auswertemodul, das ausschließlich die Möglichkeit zur internen Entschlüsselung der verschlüsselten Daten aufgrund des implementierten Schlüssels aufweist, beinhaltet ein oder mehrere in Form von Fragestellungen ausgebildeten Auswerteoptionen, die in einer Datenbank 2 des Systems abgespeichert sind. Die einzelnen Auswerteoptionen lassen sich durch den Berechtigten, im vorliegenden Fall den Patienten, nach Eingabe eines entsprechenden Zugangscodes freigeben oder sperren. Die Auswerteoptionen bzw. Fragestellungen sind mit Expertenregeln verknüpft, die im vorliegenden Beispiel in der gleichen Datenbank 2 abgelegt sind und die erforderlichen Prüfvorschriften für die Überprüfung bestimmter Bedingungen in den verschlüsselten Patientendaten erhalten, auf Basis derer die gewählte Frage beantwortet werden kann. Für die Sperrung oder Freischaltung einzelner Fragestellungen durch den Berechtigten ist es selbstverständlich auch möglich, diese Fragestellungen indirekt durch Freigeben oder Sperren der verknüpften Expertenregeln freizugeben bzw. zu sperren.

Eine beispielhafte Fragestellung, die vom Patienten freigegeben werden kann, könnte bspw. lauten: Ist Medikament B kontraindiziert? Ist diese Fragestellung durch den Berechtigten im Auswertemodul freigegeben und wird sie vom Nutzer des Systems, bspw. einem behandelnden Arzt, ausgewählt, so überprüft das Auswertemodul die intern entschlüsselten Daten gemäß der mit dieser Frage verknüpften Expertenregel. Diese Expertenregel kann bspw. lauten: Medikament B ist kontraindiziert, wenn Bedingungen a und b erfüllt sind. Das Auswertemodul überprüft die entschlüsselten Patientendaten dann auf das Vorliegen der Bedingungen a und b. Fällt diese Überprüfung positiv aus, d. h. liegen die Bedingungen a und b in den Patientendaten vor, so gibt das Auswertemodul die Antwort aus: Medikament B ist kontraindiziert. Weitere Daten, insbesondere Einzelheiten aus den entschlüsselten Patientendaten werden dem Nutzer nicht preisgegeben.

Die für den Nutzer auswählbaren, d. h. freigegebenen, Fragestellungen werden ihm vorzugsweise an einem Monitor seines Computerarbeitsplatzes dargestellt. Die freigegebenen Fragestellungen werden hierbei aus dem Auswertemodul ausgelesen bzw. vom Auswertemodul ausgegeben. Der Nutzer kann dann an seinem Monitor die von ihm gewünschte Frage markieren bzw. aktivieren und durch eine Eingabe an das Auswertemodul übermitteln. Hierbei ist es unerheblich, ob die Patientendaten auf einem an der Datenverarbeitungsstation des Nutzers eingelesenen portablen Datenträger oder in einer zentralen Datenbank vorliegen, auf die der Nutzer über ein Netzwerk Zugriff hat. Für die Auswertung der Daten holt sich das Auswertemodul die verschlüsselten Daten über die entsprechende Verbindung und wertet sie aus. Die Daten liegen dabei zu keiner Zeit in unverschlüsselter Form außerhalb des Auswertemoduls 5 oder des Prozessors des eingesetzten Rechners vor.

Der im vorliegenden Fall einzig Berechtigte, der Patient, kann durch eine entsprechende mit einem Zugangscode gesicherte Zugangsberechtigung im Auswertemodul 5 weitere bereits vorgegebene Fragestellungen freischalten oder zusätzliche Fragestellungen in das Auswertemodul laden und freigeben. Auf diese Weise lässt sich der Nutzungsbereich der sensiblen Daten durch den Berechtigten jederzeit erweitern oder einschränken. Eine andere Person, die nicht über das entsprechende Identifikationsmerkmal, bspw. einen Zugangscode oder den registrierten Fingerabdruck, verfügt, kann den Nutzungsbereich der Daten nicht ändern.

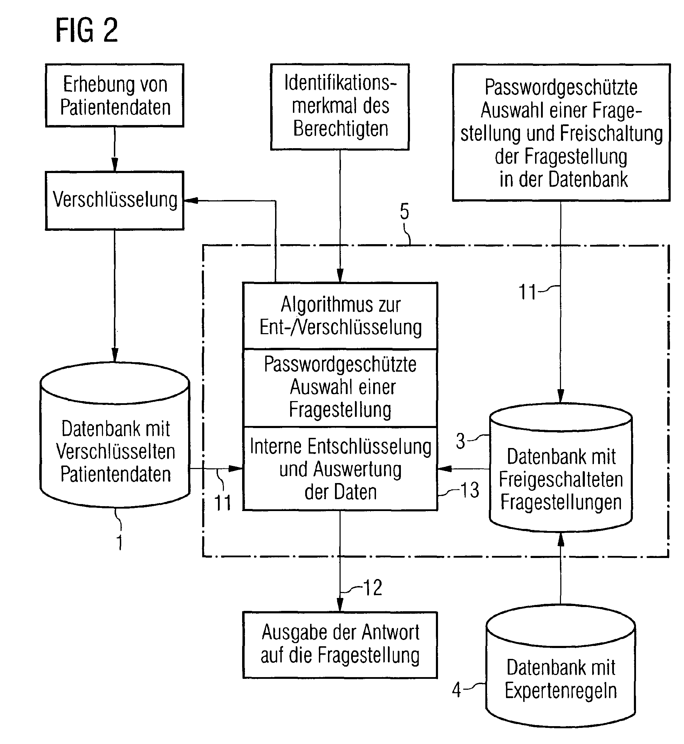

Figur 2 zeigt ein weiteres Beispiel für die Durchführung des vorliegenden Verfahrens, das in weiten Teilen in gleicher Weise durchgeführt wird wie bereits im Zusammenhang mit Figur 1 erläutert. In Abweichung vom Ausführungsbeispiel der Figur 1 erfolgt die Verschlüsselung der Patientendaten in diesem Beispiel durch einen im Auswertemodul 5 gespeicherten Algorithmus, der die Daten in Abhängigkeit von einer Eingabe des einzig Berechtigten, des Patienten, verschlüsselt. Ein Schlüssel zur Entschlüsselung der Daten wird in diesem Fall nicht abgespeichert. Vielmehr lässt sich die Entschlüsselung der Daten durch Einsatz des gleichen Algorithmus vornehmen, wenn das entsprechende Identifikationsmerkmal des Berechtigten eingegeben wird. Im Auswertemodul 5 wird somit der Schlüssel für die Entschlüsselung der Daten bei Bedarf jeweils neu rekonstruiert.

Im vorliegenden Beispiel sind weiterhin die einzelnen Fragestellungen getrennt von den zugeordneten Expertenregeln abgespeichert. Die Fragestellungen, die vom Berechtigten freigeschaltet oder gesperrt werden können, sind in einer Datenbank 3 Bestandteil des Auswertemoduls 5, während die zugeordneten Expertenregeln in einer getrennten zentralen Datenbank 4 gespeichert werden. Das Auswertemodul 5 hat bei Benutzung über ein Netzwerk Zugriff auf diese Datenbank 4 mit den Expertenregeln. Die zentrale Speicherung der Expertenregeln hat den Vorteil, dass diese in einfacher Weise gepflegt, insbesondere neueren wissenschaftlichen Erkenntnissen angepasst werden können. Insbesondere kann dadurch eine Vielzahl von Auswertemodulen für unterschiedliche Patienten auf die jeweils gleiche Datenbank 4 mit Expertenregeln zugreifen. Die Expertenregeln müssen nur an einer Stelle aktualisiert werden. Die Freigabe bzw. Sperrung erfolgt dabei selbstverständlich innerhalb der jeweiligen Auswertemodule, wobei in diesem Fall direkt die einzelnen Fragestellungen gesperrt bzw. freigegeben werden. Selbstverständlich sind beim vorliegenden Verfahren die Fragestellungen mit den zugeordneten Expertenregeln so gewählt, dass durch eine einzelne Fragestellung kein Rückschluss auf einzelne Einträge der Patientendaten gezogen werden kann.

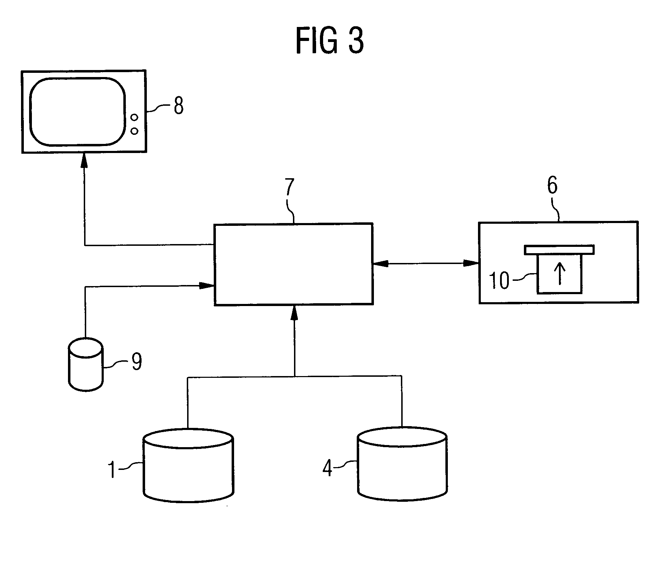

Figur 3 zeigt schließlich ein Beispiel für eine Nutzung des vorliegenden Verfahrens sowie des zugehörigen Systems mit einer herkömmlichen Datenverarbeitungsstation, die über ein Netzwerk mit anderen Rechnern oder Datenbanken verbunden werden kann. Diese Datenverarbeitungsstation 7 kann bspw. der Computerarbeitsplatz des jeweils behandelnden Arztes sein, der mit einem Monitor 8 und einem Eingabegerät 9 ausgestattet ist. Im vorliegenden Beispiel werden die Patientendaten in einer zentralen Datenbank 1 in verschlüsselter Form abgespeichert, auf die die Datenverarbeitungsstation 7 des Arztes über ein Netzwerk, wie bspw. das Internet zugreifen kann. Das Auswertemodul 5 ist auf einer Chipkarte 10 implementiert, die die einzelnen freigeschalteten Fragestellungen enthält. Der Arzt muss hierbei über ein Lesegerät 6 für diese Chipkarte 10 verfügen. Nach Einschieben der Chipkarte 10 in das Lesegerät 6 wird dem Arzt am Bildschirm 8 eine Liste der verfügbaren freigegebenen Fragestellungen angezeigt, aus der er mit dem Eingabegerät 9 eine Fragestellung auswählen kann. Nach der Auswahl der Fragestellung holt sich das Auswertemodul 5 über das Netz die zugehörigen Expertenregeln aus einer zentralen Datenbank 4 sowie die verschlüsselten Daten aus der Datenbank 1. Das Auswertemodul entschlüsselt die Daten mit einem implementierten Mikroprozessor intern und wertet diese gemäß den geladenen Expertenregeln aus. Das Auswerteergebnis wird dann an die Datenverarbeitungsstation 7 übermittelt und am Bildschirm 8 dargestellt. Sollte auf der Chipkarte 10 kein eigener Prozessor implementiert sein, so kann in diesem Falle auch der Prozessor der Datenverarbeitungsstation 7 genutzt werden, der die Software für die Entschlüsselung und Auswertung der Daten vom Auswertemodul 5 lädt.

Mit dem vorliegenden System und dem zugehörigen Verfahren können vertrauliche Patientendaten zum Zwecke späterer Diagnosen oder Therapieentscheidungen genutzt werden, ohne diese direkt jemandem zugänglich zu machen. Durch ein oder mehrere Auswertemodule werden die verschlüsselt abgespeicherten Daten ausgewertet und dem Nutzer die Antwort auf die ausgewählte, vom Berechtigten freigegebene Frage ausgegeben, ohne dass die Daten für irgendeinen der Beteiligten entschlüsselt sichtbar werden. Dies reduziert das Risiko einer ungewollten Offenlegung der Daten und verbessert die Möglichkeit der Diagnosestellung und Therapieplanung für den behandelnden Arzt.

## Patentansprüche

1. Verfahren zur Auswertung sensibler Daten mit folgenden Schritten:
- Verschlüsseln der sensiblen Daten und Abspeicherung der verschlüsselten Daten;
- Bereitstellen eines Auswertemoduls (5), das Mittel für die Entschlüsselung der verschlüsselten Daten und ein oder mehrere vorgegebene Auswerteoptionen beinhaltet, die von einem Berechtigten im Auswertemodul (5) gesperrt oder freigegeben werden können und denen Expertenregeln für die Durchführung der Auswertung zugeordnet sind, auf die das Auswertemodul (5) Zugriff hat;
- Bereitstellen einer Auswahlmöglichkeit von im Auswertemodul (5) freigegebenen Auswerteoptionen für einen Nutzer;
- interne Entschlüsselung der verschlüsselten Daten, Auswertung der entschlüsselten Daten nach einer oder mehreren einer ausgewählten Auswerteoption zugeordneten Expertenregeln und Ausgabe eines Auswerteergebnisses durch das Auswertemodul (5), ohne die entschlüsselten Daten bei der Auswertung zugänglich zu machen.

2. Verfahren nach Anspruch 1,
**dadurch gekennzeichnet,**
**dass** die Mittel für die Entschlüsselung der verschlüsselten Daten einen Schlüssel oder einen Algorithmus zur Rekonstruktion eines Schlüssels umfassen.

3. Verfahren nach Anspruch 2,
**dadurch gekennzeichnet,**
**dass** der Algorithmus den Schlüssel in Abhängigkeit von einer Eingabe oder einem biometrischen Merkmal des Berechtigten erzeugt.

4. Verfahren nach einem der Ansprüche 1 bis 3,
**dadurch gekennzeichnet,**
**dass** die sensiblen Daten unmittelbar nach deren Erfassung verschlüsselt werden, so dass sie zu keiner Zeit in unverschlüsselter Form auf einem Datenträger zugänglich sind.

5. Verfahren nach einem der Ansprüche 1 bis 4,
**dadurch gekennzeichnet,**
**dass** die Expertenregeln im Auswertemodul (5) implementiert sind.

6. Verfahren nach einem der Ansprüche 1 bis 4,
**dadurch gekennzeichnet,**
**dass** die Expertenregeln in einer Datenbank (4) abgespeichert sind, auf die das Auswertemodul (5) während der Durchführung des Verfahrens Zugriff hat.

7. Verfahren nach einem der Ansprüche 1 bis 6,
**dadurch gekennzeichnet,**
**dass** die Sperrung und/oder Freigabe von Auswerteoptionen im Auswertemodul (5) nur nach Eingabe einer vorgegebenen Benutzerkennung durch den Berechtigten ermöglicht wird.

8. Verfahren nach Anspruch 7,
**dadurch gekennzeichnet,**
**dass** durch den Berechtigten nach Eingabe der vorgegebenen Benutzerkennung im Auswertemodul (5) weitere Auswerteoptionen hinzugefügt und/oder Auswerteoptionen gelöscht werden können.

9. Verfahren nach einem der Ansprüche 1 bis 8,
**dadurch gekennzeichnet,**
**dass** das Bereitstellen einer Auswahlmöglichkeit von im Auswertemodul (5) freigegebenen Auswerteoptionen durch Anzeige einer Liste der freigegebenen Auswerteoptionen auf einem Monitor (8) erfolgt.

10. Verfahren nach einem der Ansprüche 1 bis 9,
**dadurch gekennzeichnet,**
**dass** eine Auswertung der Daten durch das Auswertemodul (5) nur nach Eingabe eines vorgegebenen Zugangscodes erfolgt.

11. Verfahren nach einem der Ansprüche 1 bis 10,
**dadurch gekennzeichnet**,
die verschlüsselten Daten und das Auswertemodul (5) auf einem gemeinsamen Datenträger abgespeichert werden.

12. Verfahren nach einem der Ansprüche 1 bis 10,
**dadurch gekennzeichnet,**
**dass** die verschlüsselten Daten und das Auswertemodul (5) auf getrennten Datenträgern abgespeichert werden.

13. Verfahren nach einem der Ansprüche 1 bis 12,
**dadurch gekennzeichnet,**
**dass** die verschlüsselten Daten und/oder das Auswertemodul (5) auf einem portablen Datenträger (10) abgespeichert werden.

14. Verfahren nach einem der Ansprüche 1 bis 13,
**dadurch gekennzeichnet,**
**dass** die Auswerteoptionen Fragestellungen sind.

15. Verfahren nach einem der Ansprüche 1 bis 14,
**dadurch gekennzeichnet,**
**dass** die Auswerteoptionen mit den zugeordneten Expertenregeln derart gewählt sind, dass sie keinen Rückschluss vom Auswerteergebnis auf einzelne der sensiblen Daten zulassen.

16. Verfahren nach einem der Ansprüche 1 bis 15,
**dadurch gekennzeichnet,**
**dass** dem Berechtigten Mittel für die Entschlüsselung der verschlüsselten Daten bereitgestellt werden.

17. System zur Auswertung sensibler Daten mit einer Eingabeschnittstelle (11), einer Ausgabeschnittstelle (12) und einem Auswertemodul (5), das Mittel für die Entschlüsselung verschlüsselter Daten, ein oder mehrere vorgegebene Auswerteoptionen, die von einem Berechtigten im Auswertemodul gesperrt oder freigegeben werden können und denen Expertenregeln für die Durchführung der Auswertung zugeordnet sind, auf die das Auswertemodul (5) Zugriff hat, und eine Einrichtung (13) zur internen Entschlüsselung der verschlüsselten Daten, zur Auswertung der entschlüsselten Daten nach einer oder mehreren einer ausgewählten Auswerteoption zugeordneten Expertenregeln und zur Ausgabe eines Auswerteergebnisses über die Ausgabeschnittstelle (12) beinhaltet.

18. System nach Anspruch 17,
**dadurch gekennzeichnet,**
**dass** die Mittel für die Entschlüsselung der verschlüsselten Daten einen Schlüssel oder einen Algorithmus zur Rekonstruktion eines Schlüssels umfassen.

19. System nach Anspruch 18,
**dadurch gekennzeichnet,**
**dass** der Algorithmus den Schlüssel in Abhängigkeit von einer Eingabe oder einem biometrischen Merkmal des Berechtigten erzeugt.

20. System nach einem der Ansprüche 17 bis 19,
**dadurch gekennzeichnet,**
**dass** die Expertenregeln im Auswertemodul (5) implementiert sind.

21. System nach einem der Ansprüche 17 bis 19,
**dadurch gekennzeichnet,**
**dass** die Expertenregeln in einer Datenbank (4) abgespeichert sind, auf die das Auswertemodul (5) während der Durchführung des Verfahrens Zugriff hat.

22. System nach einem der Ansprüche 17 bis 21,
**dadurch gekennzeichnet,**
**dass** das Auswertemodul (5) derart ausgebildet ist, dass es die Sperrung und/oder Freigabe von Auswerteoptionen nur nach Eingabe einer vorgegebenen Benutzerkennung ermöglicht.

23. System nach Anspruch 22,
**dadurch gekennzeichnet,**
**dass** das Auswertemodul (5) derart ausgebildet ist, dass es nach Eingabe der vorgegebenen Benutzerkennung weitere Auswerteoptionen hinzufügen und/oder Auswerteoptionen löschen lässt.

24. Verfahren nach einem der Ansprüche 17 bis 23,
**dadurch gekennzeichnet,**
**dass** das Auswertemodul (5) zur Anzeige von freigegebenen Auswerteoptionen auf einem Monitor (8) ausgebildet ist.

25. Verfahren nach einem der Ansprüche 17 bis 24,
**dadurch gekennzeichnet,**
**dass** das Auswertemodul (5) derart ausgebildet ist, dass es eine Auswertung der Daten nur nach Eingabe eines vorgegebenen Zugangscodes erfolgt.

26. Verfahren nach einem der Ansprüche 17 bis 25,
**dadurch gekennzeichnet**,
die verschlüsselten Daten und das Auswertemodul (5) auf einem gemeinsamen Datenträger abgespeichert sind.

27. Verfahren nach einem der Ansprüche 17 bis 25,
**dadurch gekennzeichnet,**
**dass** die verschlüsselten Daten und das Auswertemodul (5) auf getrennten Datenträgern abgespeichert sind.

28. Verfahren nach einem der Ansprüche 17 bis 27,
**dadurch gekennzeichnet,**
**dass** die verschlüsselten Daten und/oder das Auswertemodul (5) auf einem portablen Datenträger (10) abgespeichert sind.

29. Verfahren nach einem der Ansprüche 17 bis 28,
**dadurch gekennzeichnet,**
**dass** die Auswerteoptionen Fragestellungen sind.
